Europäisches Patentamt

European Patent Office

Office européen des brevets

(11) Veröffentlichungsnummer: **0 198 110**
**B1**

(12) **EUROPÄISCHE PATENTSCHRIFT**

(45) Veröffentlichungstag der Patentschrift:
03.01.90

(51) Int. Cl.⁵: $G\ 11\ B\ 5/706$, $C\ 01\ G\ 37/027$

(21) Anmeldenummer: 85109558.8

(22) Anmeldetag: 30.07.85

(54) Verfahren zur Herstellung von ferromagnetischem Chromdioxid.

(30) Priorität: 17.04.85 DE 3513723

(43) Veröffentlichungstag der Anmeldung:
22.10.86 Patentblatt 86/43

(45) Bekanntmachung des Hinweises auf die Patenterteilung.: 03.01.90 Patentblatt 90/01

(84) Benannte Vertragsstaaten:
AT BE CH DE FR GB IT LI NL SE

(56) Entgegenhaltungen:
DE--A-- 2 332 854
DE--B-- 2 022 820

(73) Patentinhaber: BASF Aktiengesellschaft
Carl-Bosch-Strasse 38
D-6700 Ludwigshafen (DE)

(72) Erfinder: Ohlinger, Manfred, Dr.
Anselm-Feuerbach-Strasse 13
D-6710 Frankenthal (DE)
Erfinder: Mueller, Norbert, Dr.
Maximilianstrasse 23
D-6701 Friedelsheim (DE)
Erfinder: Peter, Rudolf, Dr.
Wiesenstrasse 1
D-6708 Neuhofen (DE)
Erfinder: Wettstein, Eugen
Jungholzstrasse 9
D-6728 Germersheim 1 (DE)

**Beschreibung**

Die Erfindung betrifft ein Verfahren zur Herstellung von mit Fremdelementen modifiziertem hochkoerzitiven Chromdioxid.

Es sind eine Reihe von Verfahren bekannt, bei denen zur Herstellung von ferromagnetischem Chromdioxid von Chromoxiden oder von Mischungen von Chromoxiden mit einer durchschnittlichen Wertigkeit von mindestens 4 ausgegangen wird und das Verfahren bei erhöhtem Druck und erhöhter Temperatur in Anwesenheit von Wasser durchgeführt wird. Außerdem ist mehrfach beschrieben, daß durch Modifizierung eines solchen Chromdioxids mit einer Reihe von Metallen eine Verbesserung der magnetischen Eigenschaften des Endprodukts möglich wird. So beschreibt die US-A 30 34 988, ein verbessertes Chromdioxid durch die Umsetzung von Chromtrioxid in Gegenwart von einem Metall der Ordnungszahl 22 bis 28 bzw. einer Verbindung desselben sowie einem Element der Gruppe V des Periodensystems und gegebenenfalls Wasser bei Temperaturen zwischen 300 und 500 °C und Drücken von bis zu 2 940 bar zu erhalten. Die auf diese Weise hergestellten Chromdioxide weisen Koerzitivfeldstärken von bestenfalls 34 kA/m auf. Nach einem weiteren Verfahren wie in der NI-A 66 17 476 offenbart, werden Chromoxide oder Mischungen davon mit einer mittleren Wertigkeit des Chroms von mindestens 4 in Gegenwart von Alkalidichromaten und vorbekannten Dotierungsmitteln bei Temperaturen von 350 bis 500 °C und Drücken von 245 bis 980 bar behandelt. Hohe Koerzitivfeldstärken des resultierenden Produkts werden allerdings nur dann erhalten, wenn der Reaktionsdruck bei 980 bar liegt. Außerdem ist an diesem Verfahren nachteilig, daß als Ausgangsmaterial ein aufwendig herzustellendes Chrom(III)oxid erforderlich ist.

Des weiteren ist aus der DE-C 20 22 820 bekannt, daß ein Chromdioxid mit hoher Koerzitivfeldstärke dann erhalten werden kann, wenn bei dem üblichen Verfahren außer einem Zusatz von Antimon, Selen, Tellur oder deren Verbindungen als einem ersten Modifizierungsmittel Eisen in der Form nadelförmiger Kristalle und/oder nadelförmiger Eisenoxid-Teilchen als zweites Modifizierungsmittel eingesetzt wird. Hierbei beträgt die Menge an eingesetztem Eisen 0,1 bis 10 Gew.-% und die Gesamtmenge an Modifizierungsmittel bis zu 25 Gew.-%.

Wenn auch diese und weitere ähnliche bekannte Verfahren es erlauben, ferromagnetische Chromdioxide mit hohen Koerzitivfeldstärken herzustellen, so bedarf es dabei meist hoher Anteile von Modifizierungsmitteln. Diese hohen Zusatzmengen ergeben zwar keine Verringerung der Magnetisierungswerte, jedoch bewirken sie eine insbesondere hinsichtlich des Einsatzes der Chromdioxide bei der Herstellung von magnetischen Aufzeichnungsträgern bei den elektroakustischen Eigenschaften sich nachteilig bemerkbar machende Kristallitgröße.

Eine weitere Verbesserung ist gemäß der EP-A 27 640 durch den Einsatz der kubischen Modifikation des Antimonoxids, des Senarmontits, zu erreichen. Dadurch ist eine Verbesserung der magnetischen Eigenschaften insbesondere dann wirksam, wenn die spezifische Oberfläche des Senarmontits zwischen 3 und 10 m²/g beträgt. Bei der Durchführung des Verfahrens zeigt sich jedoch, daß die Gewinnung von reinem Senarmontit mit diesen Oberflächenwerten nur schwer möglich ist. Außerdem ist von Nachteil, daß beim Zerkleinern und Mahlen des Senarmontits zu dem für die Chromdioxid-Synthese nötigen feinen Pulver ein Teil in die weniger wirksame rhombische Modifikation umgewandelt wird. Zusätzlich bedarf die Handhabung von staubförmigem Antimonoxid besonderer Schutzmaßnahmen.

Es bestand daher die Aufgabe, ein Verfahren zur herstellung von ferromagnetischen Chromdioxiden mit hohen Koerzitivfeldstärken unter gleichzeitiger Verringerung des hierfür erforderlichen Anteils an Modifizierungsmitteln bereitzustellen. Insbesondere war es Aufgabe, ein solches Modifizierungsmittel zu finden, das sich in sehr gleichmäßiger und extrem feinverteilter Form in das Reaktionssystem bei der Chromdioxidsynthese einbringen und sich zudem leicht handhaben läßt.

Es wurde nun überraschenderweise gefunden, daß sich ferromagnetische Chromdioxide durch Umsetzen von Oxiden des 3-wertigen und 6-wertigen Chroms bei erhöhtem Druck und erhöhter Temperatur in Gegenwart von Wasser unter Zusatz von zumindest einer Antimonverbindung als Modifizierungsmittel sowie gegebenenfalls weiterer Zusatzstoffe in einer 15 Gew.-% nicht übersteigenden Menge gemäß der Aufgabe herstellen lassen, wenn die als Modifizierungsmittel eingesetzte Antimonverbindung in Form eines wasserlöslichen Salzes vorliegt und in einer Menge von weniger als 4 Gew.-%, bezogen auf das entstehende Chromdioxid zugesetzt wird mit der Maßgabe, daß das Anion der salzartigen Antimonverbindung zumindest einen organischen Molekülteil enthält, welcher in konzentrierter Chromsäure oxidiert wird.

Als salzartige Antimonverbindungen im Sinne der Erfindung eignen sich vor allem Antimontartrat oder Kaliumantimonyltartrat, wobei im allgemeinen bereits eine Menge von weniger als 2 Gew.%, bezogen auf das entstehende Chromdioxid ausreichend ist. In besonders zweckmäßiger Weise führen entsprechende Mengen von 0,1 bis 1,0 Gew.% der Antimonverbindung zu den vorteilhaften Eigenschaften des Endprodukts.

Bei einer vorteilhaften Ausgestaltung des erfindungsgemäßen Verfahrens werden zu der als Modifizierungsmittel eingesetzten Antimonverbindung als weiteres Modifizierungsmittel Eisen entweder in Form nadelförmiger Eisenteilchen mit einer spezifischen Oberfläche nach BET zwischen 5 bis 40 m²/g oder in besonders vorteilhafter Weise in Form nadelförmiger Eisenoxid-Teilchen, wie die α- oder γ-

Eisenoxidhydroxide, der Magnetit oder die α- oder γ-Eisen(III)oxide, eingesetzt. Die angegebenen Mengen betragen für die nadelförmigen Eisenteilchen 0,4 bis 10 Gew. % und für die nadelförmigen Eisenoxidteilchen 0,5 bis 15 Gew. %.

Die Erfindung bezieht sich auf bekannte Verfahren zur Herstellung von ferromagnetischem Chromdioxid bei erhöhtem Druck und erhöhter Temperatur in Anwesenheit von Wasser. So wird beispielsweise beim vorliegenden Verfahren in einem Reaktionsgefäß Wasser vorgelegt, unter Rühren Chromsäure eingetragen und die Modifizierungsmittel gemäß der erfindungsgemäßen Ausgestaltung dieses Verfahrens zugegeben. Nach Abklingen der nach der Zugabe einsetzenden Gasentwicklung, wird unter weiterem Rühren dann Chrom(III)oxid in der für die Synproportionierungsreaktion erforderlichen stöchiometrischen Menge hinzugefügt. Die Bildung des Chromdioxids erfolgt in der sich anschließenden Behandlung der Mischung im Hochdruckreaktor bei 100 bis 700 bar und 200 bis 600 °C. Nach 10 bis 50 Stunden wird das Chromdioxid mechanisch aus dem Reaktionsbecher entfernt und gegebenenfalls in bekannter Weise oberflächlich durch Einwirkung von Reduktionsmitteln auf chemischem Wege stabilisiert. Das so hergestellte Chromdioxid besteht aus nadelförmigen Teilchen mit einer durchschnittlichen Teilchenlänge von 0,1 bis 2,0 $\mu$m insbesondere 0,2 bis 0,9 $\mu$m bei einem Längen-/Dicken-Verhältnis von 15 : 1 bis 5 : 1 und einer nach BET bestimmten spezifischen Oberfläche zwischen 10 und 50 $m^2/g$.

Überraschenderweise führt die erfindungsgemäße Modifizierung zu einem Chromdioxid, das trotz der geringen Mengen an zugesetzter Antimonverbindung von kleiner 4,0 Gew.-%, vorzugsweise von 0,1 bis 1,0 Gew.-%, und einer Gesamtmodifizierungsmittelmenge von kleiner 15, insbesondere von 0,4 bis 10 Gew.-%, jeweils bezogen auf das Endprodukt, bereits Koerzitivfeldstärken von größer 35 kA/m aufweist. Auch ist die größere Feinteiligkeit der Chromdioxide gemäß dem erfindungsgemäßen Verfahren hervorzuheben, ebenso wie die besonders vorteilhafte enge Teilchengrößenverteilung.

Die vorteilhaften Eigenschaften eines gemäß der Erfindung hergestellten Chromdioxids werden vor allem bei der Verwendung als magnetisches Material zur Herstellung von magnetischen Aufzeichnungsträgern deutlich.

Die Verarbeitung eines solchermaßen hergestellten Chromdioxids erfolgt nach bekannten Methoden. Für die Herstellung der Magnetschicht werden 2 bis 5 Gewichtsteile Chromdioxid mit einem Teil des Bindemittels bzw. -gemisches sowie den geeigneten Dispergierhilfsmitteln, Gleitmitteln und weiteren üblichen Zusatzstoffen in einer Gesamtmenge bis zu 10 Gew.-% des Chromdioxids zu einer Dispersion verarbeitet. Die so erhaltene Dispersion wird filtriert und mit einer üblichen Beschichtungsmaschine, z. B. mittels eines Linealgießers, auf den unmagnetischen Träger in einer oder mehreren dünnen Schichten oder auf einen mit einer anderen Magnetschicht bereits versehenen Magnetogrammträger in dünner Schicht aufgetragen. Vor Trocknung der flüssigen Beschichtungsmischung bei Temperaturen zwischen 50 und 90 °C wird gegebenenfalls eine magnetische Ausrichtung der Chromdioxidteilchen vorgenommen. Für eine spezielle Oberflächenvergütung der Magnetschicht werden die beschichteten Folienbahnen zischen geheizten polierten Walzen unter Druck hindurchgeführt. Danach betragen die Dicken der Magnetschichten üblicherweise zwischen 1,5 und 12 $\mu$m.

Als Bindemittel für die Magnetschichten können die bekannten Polymerbindemittel verwendet werden, wie Vinylchlorid-Copolymere, Acrylat-Copolymere, Polyvinylacetale, wie Polyvinylformal oder Polyvinylbutyral, höhermolekulare Epoxidharze, Polyurethane und Gemische dieser und ähnlicher Bindemittel. Als vorteilhaft haben sich die in einem flüchtigen organischen Lösungsmittel löslichen elastomeren und praktisch isocyanatgruppenfreien linearen Polyesterurethane erwiesen, wie sie durch Umsetzung eines Polyesters aus einer aliphatischen Dicarbonsäure mit 4 bis 6 C-Atomen, wie Adipinsäure, und mindestens einem aliphatischen Diol mit 3 bis 10 C-Atomen, wie 1,2- oder 1,3-Propylenglykol, 1,4-Butandiol, Diethylenglykol, Neopentylglykol oder 1,8-Octandiol, mit einem Diisocyanat mit 6 bis 24 und insbesondere 8 bis 20 C-Atomen, wie Toluylendiisocyanat oder 4,4'-Diisocyanatodiphenylmethan, bevorzugt in Gegenwart einer kleineren Menge eines Glykols mit 4 bis 10 C-Atomen, wie 1,4-Butandiol, das eine Kettenverlängerung bewirkt, hergestellt werden können. Bevorzugt sind solche Polyesterurethane aus Adipinsäure, 1,4-Butandiol und 4,4'-Diisocyanatodiphenylmethan. Bevorzugte Polyesterurethane haben eine Shore-Härte A von 70 bis 100, eine Festigkeit von 400 bis 420 kp/cm$^2$ und eine Dehnung von etwa 440 bis 560 %. Gut bewährt haben sich auch Polymerbindemittel auf der Basis eines Copolymerisates aus 70 bis 95 und insbesondere 75 bis 90 Gew.-% Vinylchlorid und 5 bis 30 und insbesondere 10 bis 25 Gew.-% eines Alkylesters einer olefinisch ungesättigten Carbonsäure mit 3 bis 5 C-Atomen, wie Acrylsäure, Methacrylsäure oder Maleinsäure, und bevorzugt mit 1 bis 3 C-Atomen im Alkylrest. Hervorzuheben sind hierbei die entsprechenden Vinylchlorid-Copolymerisate mit mindestens einem $C_1$- bis $C_3$-Dialkylmaleinat, wie Copolymerisate aus 70 bis 90 Gew.-% Vinylchlorid, 5 bis 15 Gew.-% Dimethylmaleinat und 5 bis 15 Gew.-% Diethylmaleinat. Der K-Wert nach H. Fikentscher liegt für die besonders geeigneten Polymerbindemittel zwischen 40 und 60.

Die unter Verwendung des erfindungsgemäß hergestellten Chromdioxids gefertigten magnetischen Aufzeichnungsträger weisen die bekannt guten elektroakustischen und gegebenenfalls Video-Kenndaten bekannter Chromdioxid-Magnetbänder auf Darüber hinaus sind die aber besonders rauscharm und zusätzlich besonders kopierfest. Durch das geringe Betriebsrauschen ist die Dynamik der Bänder sowohl bei niederen, wie bei auch hohen Frequenzen besonders hoch, d. h. die Bänder können optimal ausgesteuert werden. Sie zeigen außerdem noch ein überraschend gutes Verhältnis zwischen Ruhegeräusch und Kopierdämpfung.

Die Erfindung sei anhand der folgenden Beispiele gegenüber einem Vergleichsversuch nach dem Stand der Technik näher erläutert. Die in den nachstehenden Beispielen und dem Vergleichsversuch genannten Teile und Prozente beziehen sich, soweit nicht anders angegeben, auf Gewicht. Volumenteile verhalten sich zu Teilen wie Liter zu Kilogramm.

## Beispiel 1

In einen Reaktionsgefäß mit einem Volumen von 4 l werden 2,19 l Wasser vorgelegt. Dann werden unter Rühren zunächst 5,68 kg Chromsäureanhydrid ($CrO_3$) zugegeben. Nach 10 Minuten werden dazu 33 g Kaliumantimonyltartrat ($KSbO(C_4H_4O_6) \cdot 0,5$ $H_2O$, Molgewicht 333,93) (0,38 Gew.-%, bezogen auf Chromdioxid) und 104 g nadelförmiges $\gamma$-$Fe_2O_3$ (1,3 Gew.-%, bezogen auf Chromdioxid) zugegeben. Ist die durch Zugabe des antimonhaltigen Modifizierungsmittels einsetzende Gasentwicklung abgeklungen, werden unter ständigem Rühren 2,84 kg Chrom(III)oxid eingetragen und weitere 20 Minuten gerührt. Danach wird die Reaktionsmaische in einem Autoklaven auf Temperaturen zwischen 300 und 350 °C erhitzt. Dabei bildet sich Chromdioxid. Durch den entstehenden Sauerstoff baut sich ein Druck auf, der mittels Regelventil bei 300 bis 400 bar gehalten wird. Nach Reaktionsende wird der Reaktor so entspannt und abgekühlt, daß das Chromdioxid mit einer Restfeuchte von 1 bis 5 % anfällt. Es wird mechanisch aus dem Reaktorgefäß ausgeräumt, gemahlen und in einer wäßrigen Natriumsulfitlösung suspendiert und mittels Naßmühlen desagglomeriert. Dabei werden 10 % des Chromdioxids an der Kristalloberfläche reduziert und zu Chrom(III)oxid-hydroxid überführt. Nach Filtration und Waschen wird bei 50 °C im Vakuum getrocknet.

An dem resultierenden Chromdioxid werden die spezifische Oberfläche nach BET in [$m^2$/g] sowie die magnetischen Eigenschaften mittels eines Schwingmagnetometers in einem Meßfeld von 160 kA/m bei einer mittleren Stopfdichte $\rho$[g/$cm^3$] bestimmt, und zwar die Koerzitivfeldstärke $H_c$ in (kA/m), sowie die spezifische Remanenz $M_r/\rho$ und die spezifische Magnetisierung $M_s/\rho$ (n$Tm^3$/g).

Die bestimmten Meßwerte sind in der Tabelle angegeben.

## Beispiel 2

Es wird wie in Beispiel 1 beschrieben verfahren, jedoch werden 42 g Kaliumantimonyltartrat eingesetzt. Die Meßergebnisse sind in der Tabelle angegeben.

## Beispiel 3

Es wird wie in Beispiel 1 beschrieben verfahren, jedoch werden 55 g Kaliumantimonyltartrat eingesetzt. Die Meßergebnisse sind in der Tabelle angegeben.

## Beispiel 4

Es wird wie in Beispiel 1 beschrieben verfahren, jedoch werden 39 g Antimontartrat [$Sb_2(C_4H_4O_6)_3 \cdot$ 6 $H_2O$, Molgewicht 795,81] eingesetzt. Die Meßergebnisse sind in der Tabelle angegeben.

## Beispiel V

Es wird wie in Beispiel 1 beschrieben verfahren, jedoch wird anstelle von Kaliumantimonyltartrat die auf Antimon bezogen entsprechende Menge an Antimon(III)oxid [$Sb_2O_3$, Molgewicht 291,5], d. h. 14,4 g eingesetzt. Die Meßergebnisse sind in der Tabelle angegeben.

## Beispiel B1

In einer 1 000 Volumenteile fassenden zylindrischen Stahlmühle, in welcher 1 000 Teile Stahlkugeln mit einem Durchmesser zwischen 4 und 7 mm enthalten sind, werden 115 Teile eines gemäß Beispiel 1 hergestellten Chromdioxids, 2 Teile Zinkstearat, 1,5 Teile Sojalecithin, 3 Teile eines Gemisches flüssiger Fettsäuren mit einem Schmelzpunkt zwischen 50 und 59 °C, 110 Teile Gemisches aus gleichen Teilen Tetrahydrofuran und 1,4-Dioxan sowie 200 Teilen einer 15 Zigen Bindemittellösung, hergestellt durch Lösen von 19,5 Teilen eines elastomeren, thermoplastischen Polyurethans (erhalten gemäß DT-AS 11 06 959 aus Adipinsäure, 1,4-Butandiol und 4,4'-Diphenylisocyanatodiphenylmethan) und 10,5 Teilen eines Vinylchlorid-Polymerisats aus 80 Teilen Vinylchlorid, 10 Teilen Dimethylmaleinat in 170 Teilen eines Gemisches aus gleichen Teilen Tetrahydrofuran und 1,4-Dioxan eingebracht. Die Mischung wird 5 Tage dispergiert, die erhaltene Dispersion unter Druck durch eine Glasfaser-Papier-Filterschicht filtriert und auf einer üblichen Beschichtungsmaschine mittels eines Linealgießers in einer solchen Dicke auf eine 12 $\mu$m dicke Polyethylenterephthalatfolie aufgebracht, daß sich nach dem Trocknen und Kalandrieren eine Trockenschichtdicke von 5,5 $\mu$m ergibt. Unmittelbar nach dem Aufgießen der flüssigen Dispersion werden die nadelförmigen Chromdioxidteilchen durch eine Magnetfeld längs der Aufzeichnungsrichtung orientiert. Die Oberfläche der Magnetschicht weist eine mittlere Rauhigkeit Rz, gemessen nach DIN 4756, Blatt 1. vpm 0,15 $\mu$m auf. Die beschichtete Folie wird in 3,81 mm breite Magnetbänder geschnitten.

Die Magnetbänder werden wie folgt geprüft:

1. Magnetische Eigenschaften

Die Bestimmung der magnetischen Eigenschaften der resultierenden Magnetbänder erfolgt mittels eines Schwingmagnetometers bei einem Meßfeld von 160 kA/m. Dabei wird die Koerzitivstärke Hc in [kA/m], die remanente Magnetisierung Mr und die maximale Magnetisierung $M_m$ in [mT] gemessen, sowie der Ausrichtfaktor Rf als der Quotient aus der Remanenz längs der magnetischen Vorzugsrichtung zu derjenigen in Querrichtung errechnet.

2. Elektroakustische Eigenschaften

Die Messung der elektroakustischen Banddaten erfolgt nach DIN 45 512, Blatt II gegen das Standard-Chromdioxidbezugsband S 4592 A mit einem Vormagnetisierungsstrom von 20 mA. Alle elektroakustischen Banddaten, Tiefenaussteuerbarkeit $A_T$ und Empfindlichkeit $E_T$ bei 1 kHz, Höhenaussteuerbarkeit $A_H$ und Empfindlichkeit $E_H$ bei 10 kHz, Ruhegeräuschspannungsabstand $RG_0$ und Kopierdämpfung Ko, sind auf Bezugsband S 4592 A bezogen, wobei letzteres bei allen Meßgrößen gleich O dB gesetzt wird.

Die entsprechenden Meßgrößen sind in der Tabelle aufgeführt.

Beispiele B2, B3 und BV

Es wird wie in Beispiel B1 beschrieben verfahren, jedoch werden die entsprechenden ChromdioxidProben der Beispiele 2 und 3 sowie des Vergleichsversuchs anstelle derjenigen des Beispiels 1 eingesetzt. Die Meßergebnisse sind in der Tabelle angegeben.

Tabelle

| | | Beispiele | | | | |
|---|---|---|---|---|---|---|
| | | 1/B1 | 2/B2 | 3/B3 | 4/B4 | V/BV |
| **Pulver** | | | | | | |
| | BET | 34,2 | 39,4 | 45,4 | 35 | 25,4 |
| | $\varrho$ | 1,15 | 1,12 | 1,13 | 1,19 | 1,35 |
| | $H_c$ | 51,5 | 51,1 | 47,4 | 50,1 | 49,5 |
| | $M_r/\varrho$ | 39,3 | 39,1 | 36,8 | 40,3 | 41,7 |
| | $M_s/\varrho$ | 68,9 | 68,7 | 64,8 | 71,0 | 76,0 |
| **Band** | | | | | | |
| | $H_c$ | 52,9 | 49,6 | 45,2 | 50,7 | 50,9 |
| | $M_r$ | 152 | 125 | 112 | 148 | 186 |
| | $M_m$ | 171 | 148 | 141 | 170 | 204 |
| | $R_f$ | 2,85 | 2,36 | 1,96 | 2,88 | 3,92 |
| | d | 5,5 | 6,0 | 6,3 | 5,3 | 5,0 |
| | $E_T$ | -2,2 | -2,5 | -3 | -2,0 | -0,5 |
| | $E_H$ | +3,5 | +3 | +1,5 | +3,2 | +2,5 |
| | $A_T$ | -2,5 | -4 | -1 | -2,1 | +0,5 |
| | $A_H$ | +5 | +4,5 | +2 | +4,5 | +4 |
| | $RG_0$ | +4,8 | +5,3 | +6,5 | +4,5 | +1,2 |
| | Ko | 56,5 | 53,0 | 42,5 | 55,0 | 57,0 |

**Patentansprüche**

1. Verfahren zur Herstellung von ferromagnetischem Chromdioxid durch Umsetzen von Oxiden des 3-wertigen und 6-wertigen Chroms bei erhöhtem Druck und erhöhter Temperatur in Gegenwart von Wasser unter Zusatz einer Antimonverbindung als Modifizierungsmittel sowie gegebenenfalls weiterer Zusatzstoffe in einer 15 Gew.-% nicht übersteigenden Menge, dadurch gekennzeichnet, daß die als Modifizierungsmittel eingesetzte Antimonverbindung in Form eines wasserlöslichen Salzes vorliegt und in einer Menge von weniger als 4 Gew.-%, bezogen auf das entstehende Chromdioxid zugesetzt wird, mit der Maßgabe, daß das Anion der salzartigen Antimonverbindung zumindest einen organischen Molekülteil enthält, welcher in konzentrierter Chromsäure oxidiert wird.

2. Verfahren gemäß Anspruch 1, dadurch gekennzeichnet, daß die als Modifizierungsmittel eingesetzte Antimonverbindung Antimontartrat ist.

3. Verfahren gemäß Anspruch 1, dadurch gekennzeichnet, daß die als Modifizierungsmittel eingesetzte Antimonverbindung Kaliumantimonyltartrat ist und in einer Menge von weniger als 2 Gew. %, bezogen auf das entstehende Chromdioxid zugesetzt wird.

4. Verfahren gemäß Anspruch 3, dadurch gekennzeichnet, daß das als Modifizierungsmittel eingesetzte Kaliumantimonyltartrat in einer Menge von 0,1 bis 1 Gew. %, bezogen auf das resultierende Chromdioxid, eingesetzt wird.

5. Verfahren gemäß Anspruch 1, dadurch gekennzeichnet, daß neben der salzartigen Antimonverbindung als weiteres Modifizierungsmittel nadelförmige Eisenoxid-Teilchen in Form des $\alpha$- oder $\gamma$-FeOOH, $Fe_3O_4$ oder $\gamma$- oder $\alpha$-$Fe_2O_3$ in einer Menge von 0,5 bis 15 Gew.-%, bezogen auf das Chromdioxid, eingesetzt werden.

6. Verfahren gemäß Anspruch 1, dadurch gekennzeichnet, daß neben der salzartigen Antimonverbindung als weiteres Modifizierungsmittel nadelförmige Elsenteilchen mit einer spezifischen Oberfläche nach BET zwischen 5 bis 40 $m^2/g$ in einer Menge von 0,4 bis 10 Gew.-%, bezogen auf das resultierende Chromdioxid, zugesetzt werden.

7. Verfahren gemäß Anspruch 3, dadurch gekennzeichnet, daß neben dem Kaliumantimonyltartrat als weiteres Modifizierungsmittel nadelförmige Eisenoxid-Teilchen in Form des $\alpha$- oder $\gamma$-FeOOH, $Fe_3O_4$ oder $\gamma$- oder $\alpha$-$Fe_2O_3$ in einer Menge von 0,5 bis 15 Gew. %, bezogen auf das Chromdioxid, eingesetzt werden.

8. Verfahren gemäß Anspruch 3, dadurch gekennzeichnet, daß neben dem Kaliumantimonyltartrat als weiteres Modifizierungsmittel nadelförmige Eisenteilchen mit einer spezifischen Oberfläche nach BET zwischen 5 bis 40 $m^2/g$ in einer Menge von 0,4 bis 10 Gew. %, bezogen auf das resultierende Chromdioxid, zugesetzt werden.

9. Verwendung der gemäß Anspruch 1 bis 8 hergestellten ferromagnetishen Chromdioxide zur Herstellung von magnetischen Aufzeichnungsträgern.

**Claims**

1. A process for the preparation of a ferromagnetic chromium dioxide by converting oxides of trivalent and hexavalent chromium under superatmospheric pressure and at elevated temperatures in the presence of water and with the addition of an antimony compound as a modifier and, if required, further additives in an amount of not more than 15 % by weight, wherein the antimony compound used as a modifier is present in the form of a water-soluble salt and is added in an amount of less than 4 % by weight, based on the resulting chromium dioxide, with the proviso that the anion of the slat-like antimony compound contains one or more organic molecular moieties which are oxidized in concentrated chromic acid.

2. A process as claimed in claim 1, wherein the antimony compound used as a modifier is antimony tartrate.

3. A process as claimed in claim 1, wherein the antimony compound used as a modifier is potassium antimonyl tartrate, and this is added in an amount of less than 2 % by weight, based on the resulting chromium dioxide.

4. A process as claimed in claim 3, wherein the potassium antimonyl tartrate used as a modifier is employed in an amount of from 0.1 to 1 % by weight, based on the resulting chromium dioxide.

5. A process as claimed in claim 1, wherein acicular iron oxide particles in the form of $\alpha$- or $\gamma$-FeOOH, $Fe_3O_4$ or $\gamma$- or $\alpha$-$Fe_2O_3$, in an amount of from 0.5 to 15 % by weight, based on the chromium dioxide, are used as a further modifier, in addition to the salt-like antimony compound.

6. A process as claimed in claim 1, wherein acicular iron particles having a BET specific surface area of from 5 to 40 $m^2/g$ are added in an amount of from 0.4 to 10 % by weight, based on the resulting chromium dioxide, as a further modifier in addition to the salt-like antimony compound.

7. A process as claimed in claim 3, wherein acicular iron oxide particles in the form of $\alpha$- or $\gamma$-FeOOH, $Fe_3O_4$ or $\gamma$- or $\alpha$-$Fe_2O_3$, in an amount of from 0.5 to 15 % by weight, based on the chromium dioxide, are used as a further modifier, in addition to the potassium antimonyl tartrate.

8. A process as claimed in claim 3, wherein acicular iron particles having a BET specific surface area of from 5 to 40 $m^2/g$ are added, in an amount of from 0.4 to 10 % by weight, based on the resulting chromium dioxide, as a further modifier in addition to the potassium antimonyl tartrate.

9. Use of a ferromagnetic chromium dioxide prepared as claimed in claim 1 or 2 or 3 or 4 or 5 or 6 or 7 or 8 for the preparation of a magnetic recording medium.

6

**Revendications**

1. Procédé de préparation de dioxyde de chrome ferromagnétique par réaction d'oxydes de chrome trivalent et hexavalent sous pression élevée et à température élevée en présence d'eau avec addition d'un composé de l'antimoine en tant qu'agent modificateur ainsi éventuellement d'autres additifs en quantité ne dépassant pas 15 % en poids, caractérisé en ce que le composé d'antimoine introduit en tant qu'agent modificateur est sous forme d'un sel soluble dans l'eau et en quantité non inférieure à 4 % en poids, par rapport au dioxyde de chrome qui se forme pourvu que l'anion du composé de l'antimoine sous forme de sel contienne au moins une partie de molécule organique qui s'oxyde dans l'acide chromique concentré.

2. Procédé selon la revendication 1, caractérisé en ce que le composé de l'antimoine introduit en tant qu'agent modificateur est un tartrate d'antimoine.

3. Procédé selon la revendication 1, caractérisé en ce que le composé de l'antimoine introduit en tant qu'agent modificateur est le tartrate de potassium et d'antimonyle et est utilisé en quantité non inférieure à 2 % en poids, par rapport au dioxyde de chrome qui se forme.

4. Procédé selon la revendication 3, caractérisé en ce que le tartrate de potassium introduit en tant qu'agent modificateur est utilisé en quantité de 0,1 à 1 % en poids par rapport au dioxyde de chrome résultant.

5. Procédé selon la revendication 1, caractérisé en ce que, en plus du composé d'antimoine sous forme de sel, on introduit comme autre agent modificateur des particules d'oxyde de fer en aiguilles sous forme de FeOOH $\alpha$ ou $\gamma$, $Fe_3O_4$ ou $Fe_2O_3$ $\gamma$ ou $\alpha$ en quantité comprise entre 0,5 et 15 % en poids par rapport au dioxyde de chrome.

6. Procédé selon la revendication 1, caractérisé en ce que, en plus du composé d'antimoine sous forme de sel, on introduit comme autre agent modificateur des particules de fer sous forme d'aiguilles ayant une surface spécifique BET comprise entre 5 et 40 m²/g en quantité comprise entre 0,4 et 10 % en poids par rapport au dioxyde de chrome résultant.

7. Procédé selon la revendication 3, caractérisé en ce que, en plus du tartrate de potassium et d'antimonyle, on introduit comme autre agent modificateur des particules d'oxyde de fer en aiguilles sous forme de FeOOH $\alpha$ ou $\gamma$, $Fe_3O_4$ ou $F_2O_3$ $\gamma$ ou $\alpha$ en quantité comprise entre 0,5 et 15 % en poids par rapport au dioxyde de chrome.

8. Procédé selon la revendication 3, caractérisé en ce que, en plus du tartrate de potassium et d'antimonyle, on introduit comme autre agent modificateur des particules de fer sous forme d'aiguilles ayant une surface spécifique BET comprise entre 5 et 40 m²/g en quantité comprise entre 0,4 et 10 % en poids par rapport au dioxyde de chrome résultant.

9. Utilisation du dioxyde de chrome ferromagnétique obtenu selon les revendications 1 à 8, pour la préparation de panneaux d'affichage magnétiques.